(19)

Europäisches
Patentamt
European
Patent Office
Office européen
des brevets

(11) **EP 1 212 922 B1**

(12) **EUROPEAN PATENT SPECIFICATION**

(45) Date of publication and mention
of the grant of the patent:
**20.05.2009 Bulletin 2009/21**

(51) Int Cl.:
*H04R 19/04* *(2006.01)* *H04R 19/00* *(2006.01)*
*H04R 19/02* *(2006.01)* *H04R 25/00* *(2006.01)*
*H04R 19/01* *(2006.01)*

(21) Application number: **00957936.8**

(22) Date of filing: **31.08.2000**

(86) International application number:
**PCT/US2000/023927**

(87) International publication number:
**WO 2001/017175 (08.03.2001 Gazette 2001/10)**

(54) **METHOD AND APPARATUS FOR LATENCY REDUCTION IN LOW POWER TWO WAY COMMUNICATIONS EQUIPMENT APPLICATIONS IN HYBRID FIBER COAX PLANTS**

VERFAHREN UND VORRICHTUNG ZUR VERRINGERUNG DER LATENZ IN ANWENDUNGEN EINER "LOW-POWER" ZWEIWEG-ÜBERTRAGUNGSEINRICHTUNG IN HYBRIDEN FIBER/COAX-SYSTEMEN

PROCEDE ET DISPOSITIF REDUISANT LES TEMPS D'ATTENTE DANS DES APPLICATIONS D'EQUIPEMENT DE COMMUNICATIONS BIDIRECTIONNELLES A FAIBLE PUISSANCE D'INSTALLATIONS HYBRIDES CABLE COAXIAL-FIBRES OPTIQUES

(84) Designated Contracting States:
**AT BE CH CY DE DK ES FI FR GB GR IE IT LI LU MC NL PT SE**

(30) Priority: **31.08.1999 US 151686 P**

(43) Date of publication of application:
**12.06.2002 Bulletin 2002/24**

(73) Proprietor: **Broadcom Corporation**
**Irvine, CA 92617 (US)**

(72) Inventors:
• **QUIGLEY, Thomas, J.**
**Irvine, CA 92618 (US)**
• **RABENKO, Ted**
**Irvine, CA 92618 (US)**

(74) Representative: **Jehle, Volker Armin et al**
**Bosch Jehle Patentanwaltsgesellschaft mbH**
**Flüggenstrasse 13**
**80639 München (DE)**

(56) References cited:
**WO-A-96/13106          WO-A-99/33229**

• **SCHUCK J ET AL: "KISS-16V1: A 16 BIT SIGNAL PROCESSOR" PROCEEDINGS OF THE INTERNATIONAL SYMPOSIUM ON CIRCUITS AND SYSTEMS,US,NEW YORK, IEEE, vol. SYMP. 24, 11 June 1991 (1991-06-11), pages 1905-1908, XP000676290 ISBN: 0-7803-0050-5**

**Description**

FIELD OF THE INVENTION

The present invention relates generally to telecommunications systems, and more particularly, to a system for reducing latency in low power equipment applications in hybrid fiber coax (HFC) plants.

BACKGROUND

The Internet has become a pervasive medium that allows worldwide access to multi-media content including audio, video, graphics and text, that typically requires a large bandwidth for downloading and viewing. Most Internet Service Providers ("ISPs") allow customers to connect to the Internet via a serial telephone line from a Public Switched Telephone Network ("PSTN"). Conventional PSTN connections typically provide data rates ranging from 14,400 bps to 56.000 bps. These data rates are typically much slower than the data rates available on a coaxial cable or HFC cable system in a cable television network.

A Cable Television Network, also known as a Community Access Television (CATV) network, typically consists of a traditional coaxial cable tree and branch or HFC network. A headend controller manages downstream and upstream bandwidth resources that have been assigned to a cable modem service. The headend controller may simultaneously provide service to and control over one or more downstream channels and one or more upstream channels. A cable modem is typically located at the home of a CATV network subscriber. Cable modems receive information and instructions via signals received on the downstream channel by the headend controller. A cable modem transmits information and replies via signals on an upstream channel to the headend controller.

Communication between the headend and customer premise equipment (CPE) such as a cable modem, may be accomplished via RF modulation of data in the forward path(headend to CPE) that all CPE may demodulate and process. The headend may also communicate control messages and timing references to the CPE to enable the CPEs to transmit bursts of data in the return path (CPE to headend). The bursts are synchronized so that the headend may demodulate and properly process the received data.

Advantageously, transmission of signals by coaxial cable introduces little distortion at high data transmission rates. However, the coaxial cable may significantly attenuate the transmitted signal. Conventionally, amplifiers are spaced along the coaxial cable throughout a HFC network to provide necessary signal enhancement. Other active devices such as for example fiber nodes may also be present in an HFC network. Failure of the primary power source in such a system removes power from these active devices, effectively shutting down the HFC network. Such a network failure may be unacceptable for voice over cable applications that require strict system availability. In addition, the government also requires system availability in certain locations even if there is a loss of the primary commercial power source.

Therefore, standby power system are typically utilized to provide auxiliary power to active network components as well as to certain customer premise equipment in the event of failure of the primary source of power. Standby systems typically include a storage battery, that is maintained at full charge by current drawn from the coaxial cable. Following failure of the primary source, the standby system delivers power immediately to avoid disruption of service over the CATV network.

However, standby power systems are extremely expensive. Each standby power unit typically includes a rectifier, battery, regulator, inverter and, in many cases, the logic circuitry for turning the standby unit on and off. Secondly, because of the circuit complexity, maintenance and replacement costs are high. Thirdly, also because of the circuit complexity, reliability is not high. Therefore, to reduce the cost of maintaining a standby power system, service providers attempt to minimize the overall power load of equipment coupled to a HFC network.

The RF circuitry and digital logic required to support and maintain bi-directional communication between customer premise equipment and the cable headend over a HFC network consumes significant amounts of power. However, the DOCSIS specification does not provide the ability to interface with equipment having power management systems. In fact, DOCSIS prohibits device disconnection, specifically requiring DOCSIS network equipment be available at all times to respond to maintenance requests. However, in lifeline powering situations, equipment that must remain available during a power outage strain the ability of the HFC plant to supply power to all network components. Therefore, it would be advantageous to reduce the power of DOCSIS compatible customer premise equipment to ensure efficient operation of the HFC plant during lifeline or power out situations.

Conventional power management techniques typically realize power savings by disabling the tuning and demodulation circuits. When returning to the full power active state, the equipment whose demodulation circuits have been disabled must re-synchronize to the CMTS to resume accurate bi-directional communications over the HFC network. Therefore, applications that have strict latency requirements may not be supported by such conventional systems. An example of an application that is adversely affected by this power management technique is voice telephony. In addition, DOCSIS specifically prohibits the incorporation of network equipment that is not available at all times to respond to maintenance requests. Therefore, it would be advantageous to provide a power management system that reduces the power of bi-directional communications equipment without introducing significant latency.

WO 99/33229 describes a method for managing MAC messages which supports dynamic resource reservation for upstream data traffic in a broadband cable system. Three specialized MAC management messages of Dynamic Session Addition, Dynamic Session Deletion, and Dynamic Session Acknowledgement are used to control setting of a filter spec parameter in a cable modem. Upstream bandwidth resource reservation is provided which allows packet scheduling to occur at a CMTS, and packet classification to occur at a cable modem. Such an arrangement allows the RSVP protocol to be adapted for use at the OSI protocol layer of a typical cable modem, thereby improving efficiency of network bandwidth/resource allocation.

EP 0 243 899 describes a cordless telephone system constituted by a base communication unit which is connected to telephone line connections, and portable communication units which are individually connected to the base unit by cordless communication links, the telephone system effectively enhancing power saving efficiency. The battery saving period of idle portable units are changed at adequate timings based on the number of telephone lines used, so that the portable units sequentially perform intermittent receipt at equal intervals.

EP 0 433 166 describes a cordless telephone arranged such that upon communication a communication channel is opened between a master station and a remote station by a radio wave and the master station is connected to a telephone line network to make a telephone conversation between the remote station and the party to be called, the remote station for intermittently receiving a predetermined channel in the standby mode, the remote station being placed in a sleep mode when the remote station does not receive such predetermined channel intermittently, the master station informs the remote station of an incoming call when the incoming call arrives, and an information of a vacant channel is exchanged between the master and remote stations when the master and remote stations are both in operative condition and in a predetermined time except for telephone communication, wherein a channel which is a vacant channel for both of the master and remote stations is registered in the cordless telephone as the predetermined channel.

According to the invention, there are provided a two way communication system as defined by independent claim 1 and a method for use in a two way communication system as defined by independent claim 19.

Further advantageous features of the invention are defined by the dependent subclaims.

It is understood that other embodiments of the present invention will become readily apparent to those skilled in the art from the following detailed description, wherein it is shown and described only embodiments of the invention by way of illustration of the best modes contemplated for carrying out the invention. Accordingly, the drawings and detailed description are to be regarded as illustrative in nature and not as restrictive.

BRIEF DESCRIPTION OF THE DRAWINGS

These and other features, aspects, and advantages of the present invention will become better understood with regard to the following description, appended claims, and accompanying drawings where:

FIG. 1 is a simplified block diagram of a cable modem system demonstrating an implementation of an exemplary latency reduction system;

FIG. 2 is a simplified block diagram of a cable modem termination system in accordance with an exemplary embodiment of the present invention;

FIG. 3 is a simplified block diagram of an out of band generator that generates out of band messages in accordance with an exemplary embodiment of the present invention;

FIG. 4 is a simplified block diagram of an out of band PHY for transmitting out of band messages in accordance with an exemplary embodiment of the present invention;

FIG. 5 is a simplified block diagram of cable modem that provides Data Over Cable Service Interface Specification (DOCSIS) compliant two way communication with the CMTS of FIG. 2 in accordance with an exemplary embodiment of the present invention;

FIG. 6 is a graphical illustration of the frequency spectrum of a DOSCIS compatible network;

FIG. 7 is a simplified block diagram of an out of band receiver front end that receives a digitally modulated signal in the frequency range of 70-130 MHz and converts it to an IF signal centered at 44 MHz in accordance with an exemplary embodiment of the present invention;

FIG. 8 is an exemplary frame structure of the out of band channel in accordance with an exemplary embodiment of the present invention;

FIG. 9 is a simplified block diagram of an out of band receiver PHY in accordance with an exemplary embodiment of the present invention;

FIG. 10 is a flow diagram demonstrating the operation of an exemplary latency reduction system in accordance with an exemplary embodiment of the present invention; and

FIG. 11 is a flow diagram of an exemplary shutdown used to place customer premise equipment in a low power state in accordance with an exemplary embodiment of the present invention; and

FIG. 12 is a flow diagram of an exemplary activation sequence used to return customer premise equipment to full power active mode in accordance with an exemplary embodiment of the present invention.

## DETAILED DESCRIPTION OF THE INVENTION

An exemplary embodiment of the present invention provides a power management system that reduces the power of DOCSIS compliant equipment without introducing significant latency. In order to appreciate the advantages of the present invention, it mill be beneficial to describe the invention in the context of an exemplary bi-directional communication network, such as a HFC network.

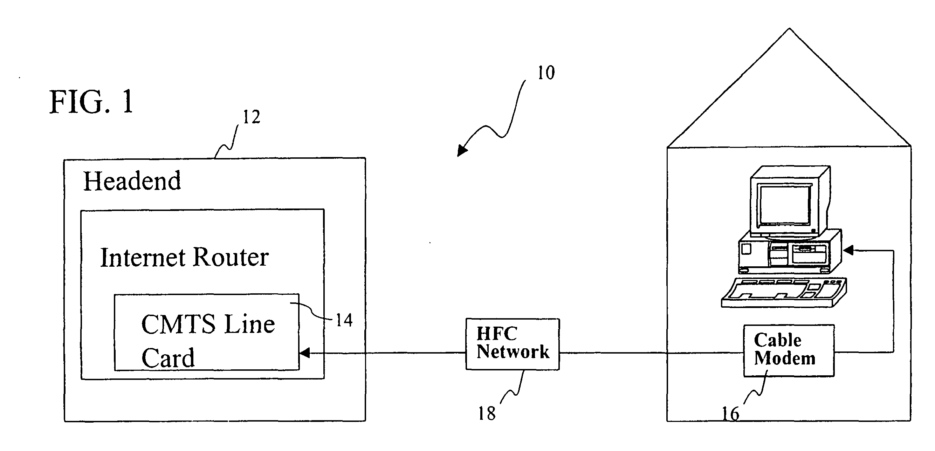

A simplified block diagram of a particular exemplary implementation is depicted in FIG. 1. An exemplary cable modem system 10 includes a headend 12 having a cable modem termination system (CMTS) 14 located at a cable company facility. A CMTS utilizing the present invention is disclosed in a U.S. Patent Application entitled "Method and Apparatus for the Reduction of Upstream Request Processing Latency in a Cable Modem Termination System" (Publication No. US 2005/190696) filed on even date herewith by Lisa Denney, Angers Hebsgaard, and Robert J. Lee.

CMTS 14 functions as a modem which services a large number of subscribers each subscriber having customer premise equipment such as for example a cable modem 16 via a HFC network 18. One of ordinary skill in the art will appreciate that the described latency reduction system may be utilized to manage the power in all DOCSIS compatible network equipment. Therefore the description of an exemplary power management system in the context of a cable modem is by way of example only and not by way of limitation.

An exemplary embodiment of the present invention reduces the power requirements of cable modem 16 or other customer premise equipment by placing equipment attached to the cable modem into a low power or power off state. In the described exemplary embodiment, the forward tuning path and demodulation circuits of the cable modem are disabled in the low power state and two way communications are suspended. Prior to entering the low power state, cable modem 16 sets a wake up timer, the expiration of which terminates the low power state, returning cable modem 16 to full power, active operation. In an exemplary embodiment; the duration of the wake up timer may be designed to provide on the order of about a 90% sleep interval and a 10% active interval. A low power sleep interval may be in the range of about 1-4 seconds.

In the described exemplary embodiment, cable modem 16 reduces its average power by continuously establishing a low power state. Cable modem 16 returns to an active state when the sleep timer expires. However, upon returning to the active state cable modem 16 monitors the downstream traffic for local commands as well as the activity level of locally attached devices. If the low activity condition persists, cable modem 16 requests another sleep interval.

When returning to the full power active state, cable modem 16 or other customer premise equipment whose demodulation circuits have been disabled re-synchronize to CMTS 14 to resume accurate bi-directional communications over the HFC network. DOCSIS Downstream communications recovery time on the order of about 25-100 msec may be introduced by the synchronization operation. Consideration of this recovery time drives the selection of the sleep recovery timer because the downstream communication recovery operation is performed at full power.

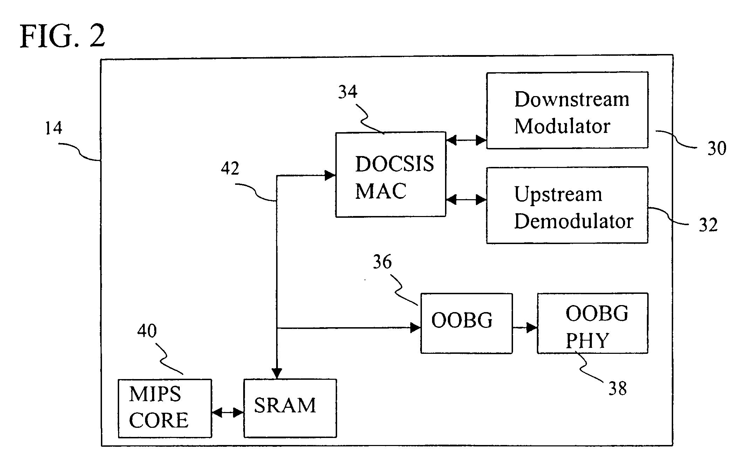

Referring to FIG. 2, cable modem termination system 14 includes a downstream modulator 30 for facilitating the transmission of data communications to the cable modems and an upstream demodulator 32 for facilitating the reception of data communications from the cable modems.

An exemplary CMT preferably includes an out of band generator (OOBG) 36 that generates control messages and places the messages into an out-of-band data stream. An OOBG PHY 38 transmits the OOB data stream to an out of band processor (OOBP) in an exemplary cable modem (not shown) that receives and processes the message. In accordance with the described exemplary power management system, CMTS 14 commands inactive cable modems into standby or sleep mode for relatively long periods of time. The cable modem returns to full power operation at the end of a predetermined interval. Upon reactivation, an internal processor may status the activity level of the cable modem peripherals. In the absence of activity, the cable modem may return to standby mode by requesting a sleep interval from CMTS 14.

Similarly, OOBG 36 of CMTS 14 or a local host may command a cable modem in a low power state, to terminate standby mode and to return to full processing capability via OOBG PHY 38. OOBG PHY 38 preferably provides a secondary fixed or narrow frequency range communications channel. OOBG PHY 38 preferably transmits a control message in the form of a cable modem address to activate a cable modem operating in a low power state. The OOB processor of the cable modem (not shown) compares the address of the message to the internal address of the cable modem. If the address matches that of the cable modem the internal cable modem processor returns the cable modem to full power operation. One of skill in the art will appreciate that the secondary OOBG PHY 38 may utilize any modulation type but is preferably constrained to have a fixed or relatively narrow frequency range and a relatively low bit rate.

CMTS 14 downstream modulator 30 facilitates the transmission of data communications to the cable modems and one or more upstream demodulators 32 facilitate the reception of data communications from the cable modems.

Downstream modulator 30 may utilize either 64 QAM or 256 QAM in a frequency band in the range of 54 to 860 MHz to provide a data rate of up to 56 Mbps. Upstream demodulator 32 may use either QPSK or 16 QAM, in a frequency range of 5 MHz to 42 MHz, to provide a data rate of up to 10 Mbps. An exemplary upstream demodulator 32 may support bursts or continuous data. Upstream demodulator 32 may also provide forward error correction (FEC) encoding and pre-equalization, and preferably niters and modulates the data stream to provide a direct 0-65 MHz analog output.

A media access controller (MAC) 34 encapsulates data received from a data network interface with the appropriate MAC address of the cable modems on the system. Each cable modem on the system (not shown) has its own MAC address. Whenever a new cable modem is installed, its address is registered with MAC 34. The MAC address is necessary to distinguish data from the cable modems since all the modems share a common upstream path, and so that the system knows where to send data Thus, data packets, regardless of format are mapped to a particular MAC address.

Upstream demodulator 32 accepts an analog signal and amplifies and digitizes the signal with an integrated programmable gain amplifier and A/D converter. The digitized signal is demodulated with recovered clock and carrier timing. Matched filters and adaptive filters remove multi-path propagation effects and narrowband co-channel interference. An integrated decoder may also perform error correction and forwards the processed received data, in either parallel or serial MPEG-2 format to DOCSIS MAC 34.

OOBG 36 preferably supports a plurality of message formats, including for example, MPEG-2 pure messages, MPEG-2 private messages with a section syntax indicator designating the message as a private section, INTS messages, and GI protocol messages. OOBG generator 36 preferably does not distinguish between INTS messages and GI protocol messages.

Upstream demodulator 32, downstream modulator 30, and OOBG 36 are controlled by a MIPS core 40 via a serial interface that may be compatible with a plurality of buses such as for example, the Motorola M-Bus or the Philips I2C bus. The interface consists of two signals, serial data (SDA) and serial clock (SCL), which may control a plurality of devices on a common bus. The addressing of the different devices may be accomplished in accordance with an established protocol on the two wire interface.

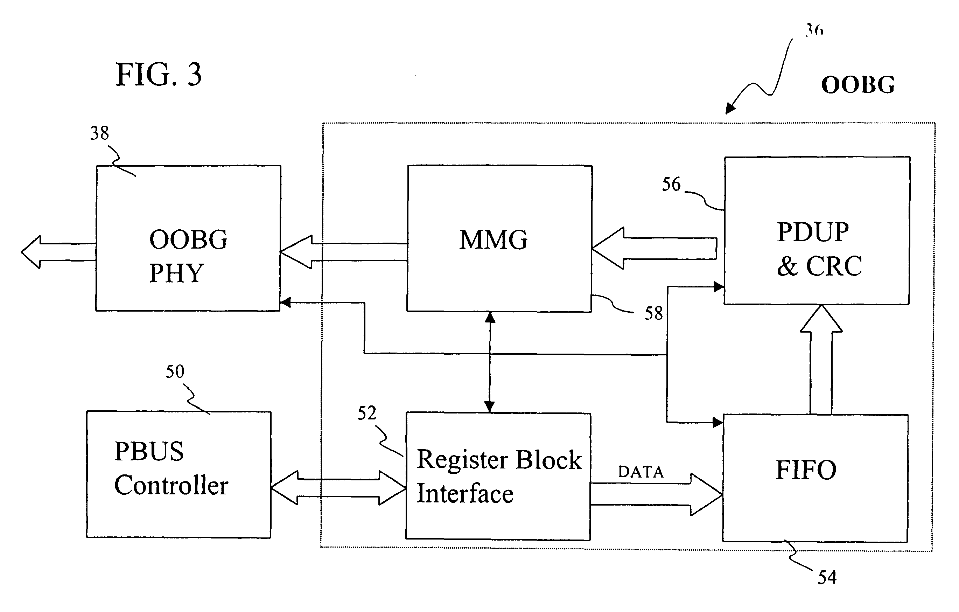

Referring to FIG. 3, an exemplary OOBG 36 exchanges messages and data with the MIPS core (not shown) via a PBUS controller 50. PBS controller 50 interfaces with a register block interface 52. Register block interface 52 provides a plurality of register settings to format data blocks to support a plurality of different modes including various debug and test modes. In addition, if the PBUS becomes overloaded, an exemplary system can forwarded a packet directly to registers, that may then be used to control OOBG PHY 38 directly, effectively bypassing the OOBG. Register block interface 52 forwards data packets to a FIFO 54 that stores bursts of data until a complete packet is received. FIFO 54 forwards complete data packets to a protocol data unit processor (PDUP) 56 that separates service data unit (SDU) packets into multiple MPEG-2 transport packets.

In addition PDUP 56 utilizes a cyclical redundancy check algorithm above the binary field to append an extra n-bit sequence, called the frame check sequence (FCS) to the remainder of every frame. The algorithm preferably treats all bit streams as binary polynomials. In one embodiment, PDUP 56 generates a FCS for an original frame. The FCS is preferably generated so that the resulting frame (the cascade of the original frame and the FCS), is exactly divisible by a pre-defined polynomial. In the described exemplary embodiment, PDUP 56 utilizes a CRC polynomial as proposed by ISO/IEC 13818-1 as follows:

$$G(x) = x^{32} + x^{26} + x^{22} + x^{16} + x^{12} + x^{11} + x^{10} + x^8 + x^7 + x^6 + x^4 + x^2 + x^1 + 1.$$

In the described exemplary embodiment, MPEG-2 packets are forwarded to a MPEG message generator (MMG) 58 that acts as a protocol interface between PDUP 56 and OOBG PHY 38.

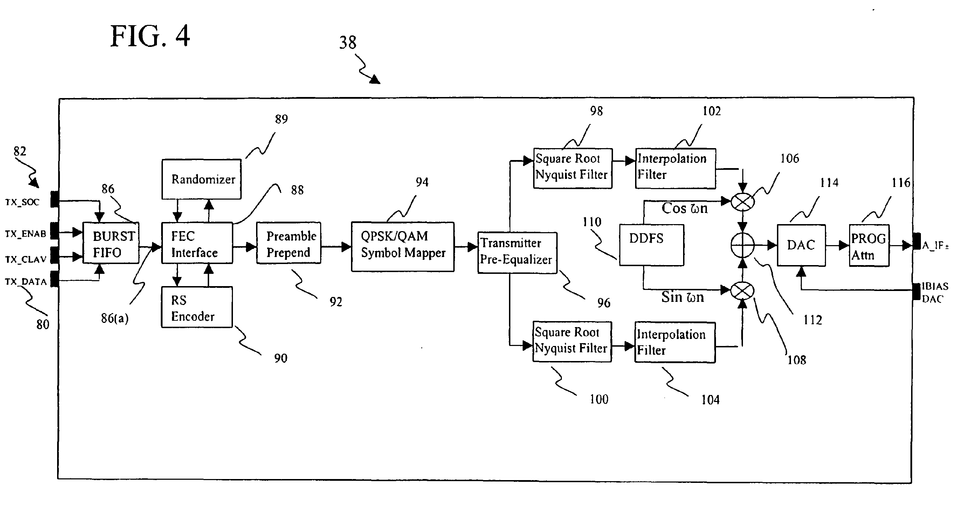

Referring to FIG. 4, an exemplary OOBG PHY 38 for transmitting out of band messages accepts a serial data stream 80 and transmit control inputs 82 from the MMG (not shown). OOBG PHY 38 outputs an analog modulated, filtered, data burst containing data at a variable rate in one of a plurality of modulation formats including for example, $\pi/4$ DQPSK, QPSK or 16-QAM. The modulated burst may consist of a power, ramp up, preamble, data, FEC, ramp down, guard time and power down in each burst. OOBG PHY 38 may further provide a data bit clock for synchronizing data.

A burst FIFO buffer 86 receives serial data stream 80. Burst FIFO buffer 86 decouples the input data rate from the transmission data rate. Burst FIFO buffer 86 provides dual-access, allowing data to be input while a burst is actively being transmitted. Buffered data signals 86(a) are forwarded to a forward error correction (FEC) interface 88 that utilizes a block coding scheme to provide coding gain to minimize the effects of both Gaussian noise and impulse errors. FEC interface 88 may contain a randomizer 89 that randomizes the data to provide an even distribution of symbols in the constellation. In the described exemplary embodiment, randomizer 89 may be programmable to provide frame-synchronization or self-synchronization. In addition, the parallel to serial conversion of bytes entering randomizer 89 and serial to parallel conversion of bits leaving randomizer 89 can be programmed to be MSB or LSB first.

FEC interface 88 may further include a Reed Solomon encoder 90 that may be programmable to correct from zero to ten symbol errors within an RS block. FEC 88 may be configured to have randomizer 89 located either before or after RS encoder 90. Randomizer 89 and RS encoder 90 produce block codewords that are passed to a preamble prepend 92 and symbol mapping block 94.

In the described exemplary OOB PHY 38 a programmable length preamble of up to 1024 bits is prepended to the data stream following FEC encoder 88. The value of the preamble may also be programmed through control registers. The prepended control information may include various channel statistics, such as for example, FECOK, correctable FEC error, uncorrected FEC error, etc.

Symbol mapper 94 may map symbols into a plurality of modulation formats including for example π4 DQPSK, QPSK and 16-QAM. In addition, modulation may further include differential or non-differential encoding. A transmitter pre-equalizer 96 accepts in-phase (I) and quadrature-phase(Q) baseband signals output by symbol mapper 94. Transmitter pre-equalizer 96 may be programmable to provide cancellation of inter-symbol interference (ISI).

Square root Nyquist filters 98 and 100 spectrally shape in-phase (I) and quadrature-phase(Q) baseband signals output by pre-equalizer 96. Nyquist filters 98 and 100 are preferably programmable with excess bandwidth on the order of about, $\alpha$ = 0.25/0.5. The maximum passband ripple of these filters is preferably less than about 0.05 dB and the minimum stopband attenuation is preferably greater than about 60 dB.

Variable interpolation filters 102 and 104 interpolate shaped, in-phase (I) and quadrature-phase(Q) baseband signals output by Nyquist filters 98 and 100 respectively up to the sample rate. Variable interpolation filters 102 and 104 maintain the fidelity of the signal at the output of the shaping filters with no appreciable degradation of the overall responses. Multipliers 106 and 108 modulate the outputs of variable interpolation filters 102 and 104 onto quadrature carriers generated by a digitally tunable frequency synthesizer 110. This allows the spectrum to be centered on a programmable IF frequency of up to one-half of the sampling rate.

A combiner 112 combines modulated I and Q signals and a digital to analog (D/A) converter 114 converts combined modulated signal to an analog waveform. DAC 114 preferably supports sample rates on the order of about 200 MHz. A programmable attenuator 116 may incrementally attenuate analog output signal by a maximum of about 25 dB. The attenuated output signal is forwarded to an out of band receiver of the cable modem (not shown). One of ordinary skill in the art will appreciate that the present invention is not limited to the described secondary OOBG PHY. Rather the present invention is equally applicable for use with any secondary communication channel operating at a secondary fixed or narrow frequency range below the bandwidth of the primary communications channel.

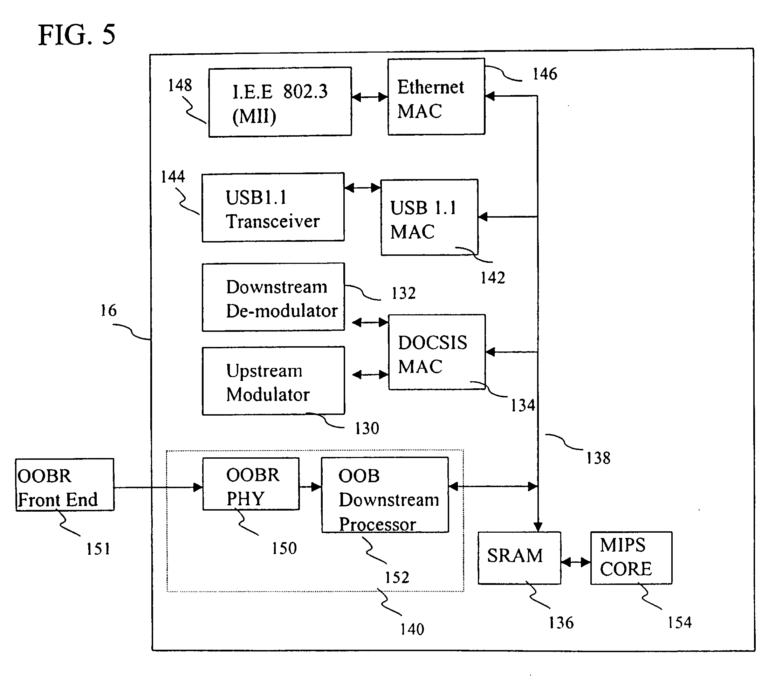

An exemplary cable modem is shown schematically in FIG. 5. The described exemplary embodiment may provide an integrated single chip solution that is compliant with the Data Over Cable Service Interface Specification (DOCSIS). The described exemplary embodiment can provide integrated functions for communicating with far end devices via the CMTS (not shown). For example, a QPSK upstream modulator 130 transmits data to a far end data terminating device, a QAM downstream demodulator 132 receives data from the far end data terminating device via a CMTS. Upstream modulator 130 and downstream demodulator 132 interface with a DOCSIS MAC 134. DOCSIS MAC 134 implements the downstream portions of the DOCSIS protocol. DOCSIS MAC 134 extracts DOCSIS MAC frames from MPEG-2 frames, processes MAC headers, and filters and processes messages and data. Downstream data packets and message packets may then be placed in system memory 136 via an internal system bus (ISB) 138.

In addition, a QPSK out of band downstream receiver 140 receives out of band, messages from the out of band generator of the CMTS (not shown). In the described exemplary embodiment the OOB messages are encoded in accordance with the MPEG-2 format. In addition, the described cable modem can support multiple peripherals in accordance with a variety of protocols. For example, a universal serial bus transceiver 144 and USB MAC 142 provide transparent bi-directional IP traffic between communications devices operating on a USB such as for example a PC workstation, server printer or other similar devices and the far end data terminating device. Additionally, an I.E.E.E. 802.3 compliant media independent interface (MII) 148 in conjunction with an Ethernet MAC 146 may also be included to provide bi-directional data exchange between communications devices such as, for example a number of PCs and or Ethernet phones and the far end data terminating device.

Those of skill in the art will appreciate that the present invention is not limited to the peripherals shown in FIG. 5. For example, the present invention may be used in a voice over cable system where cable modem 16 includes a voice and data processor for processing and exchanging voice, as well as fax and modem data over packet based networks. Therefore, the described exemplary cable modem embodiment is by way of example only and not by way of limitation.

An exemplary secondary OOB receiver 140 includes an out of band receiver (OOBR) PHY 150 and an OOB downstream processor 152, that receive and process asynchronous wake-up commands from the out of band generator of the CMTS (not shown). An OOBR front end 151 accepts an out of band analog signal. OOBR front end preferably utilizes a frequency signal synthesized by the a frequency agile local oscillator (not shown) on the cable modem 16 to down convert any signal in the range of about 70-130 MHz to a SAW centered IF signal. OOBR PHY 15 accepts the IF signal and amplifies and digitizes the signal with an integrated programmable gain amplifier and an A/D converter.

OOBR PHY 150 demodulates the signal with recovered clock and carrier timing, filters the signal and passes soft decisions to an ITU-T J.83 Annex A/B/C compatible decoder. Integrated decoders perform error correction and forward the processed received data, in either parallel or serial MPEG-2 format to OOB downstream processor 152.

OOB downstream processor 152 parses MPEG-2 compliant transport headers and messages. OOB downstream processor 152 preferably parses messages with a plurality of protocols, including for example, MPEG private, INTS and GI STARVUE and stores the messages in a memory buffer. ISB 138 facilitates two way communication between OOB downstream processor 152 and MIPS core 154. For example, MIPS core 154 may access internal registers and memory contained within OOB downstream processor 152 via ISB 138. In addition, OOB downstream processor 152 may communicate interrupts to MIPS core 154 when service is needed via ISB 138.

In the described exemplary embodiment, OOB Downstream Processor 152 contains a message filter (not shown) to identify the intended destination address of messages arriving at cable modem 16 from the CMTS. If the message filter identifies the message destination address as the address for the current device, OOB Downstream Processor 152 issues an interrupt signal to MIPS core 154 via ISB 138. In an exemplary embodiment of the present invention, the CPU (not shown) of MIPS core 154 contains circuitry to permit a low power sleep state. MIPS core 154 may be programmed such that an interrupt arriving from OOB Downstream Processor 152 via ISB 138 will return MIPS core 154 to an operating state from the sleep state.

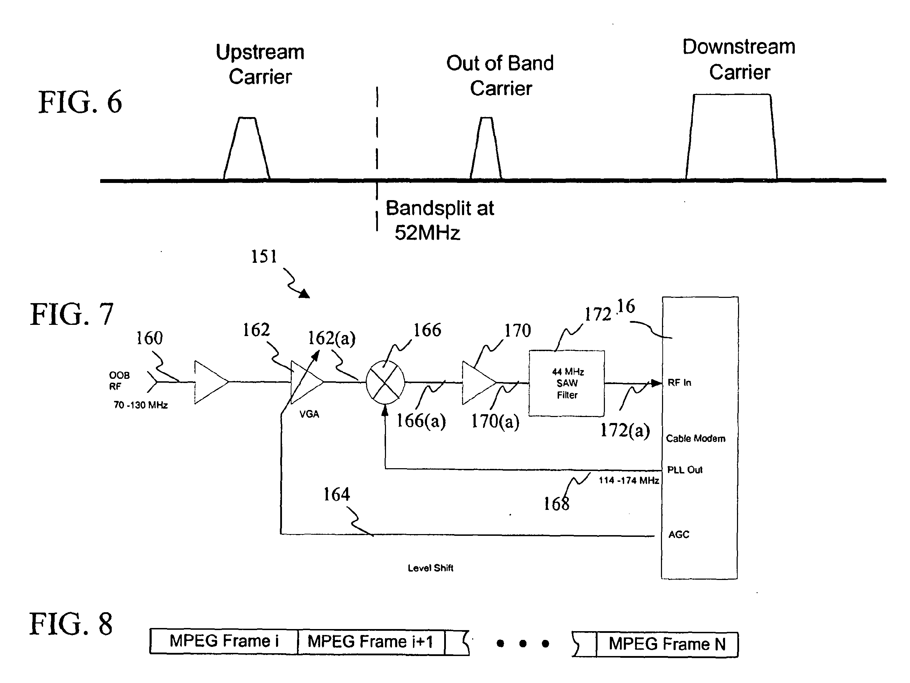

FIG. 6 illustrates the frequency spectrum of a DOSCIS compatible network. The upstream carrier provides the transmission path for the cable modems to communicate information to the CMTS. The internal framing of the data in this carrier is described by the well-known DOCSIS RF specification. The downstream carrier provides a transmission path for the CMTS to communicate to the cable modems. The internal framing of this carrier is described in the well-known DOCSIS RF specification (Data-Over-Cable Service Interface Specification, Radio Frequency Interface Specification SP-RFI-I05-991105).

The OOB receiver supports asynchronous wake up or activation commands from the CMTS to the cable modem. The OOB receiver can support either a baseband I/Q signal or an IF centered signal. Referring to FIG. 7, in IF mode, out of band receiver (OOBR) front end 151 interfaces with cable modem 16. The OOBR front end 151 receives a digitally modulated signal 160 in the frequency range of 70 - 130 MHz. A variable gain amplifier (VGA) 162 amplifies the incoming digital signal 160. In an exemplary embodiment of the present invention, cable modem 16 may provide a closed loop AGC signal 164 that may be used to control the gain of VGA 162. A mixer 166 mixes the amplified received signal 162 (a) with a sinusoidal frequency signal 168, in the frequency range of 114-174 MHz, to convert the amplified received signal to an IF signal centered at 44 MHz. The frequency signal 168 may be synthesized by a frequency agile local oscillator (not shown) on cable modem 16. An amplifier 170 may amplify the mixed signal 166(a) and a surface acoustic wave (SAW) filter 172, centered at 44 MHz filters, filters the amplified signal 170(a) and forwards an IF signal centered at 44 MHz to an RF input 174 of cable modem 16.

Referring to FIG. 8, in the described exemplary embodiment, the OOB channel may be a sequence of MPEG frames consisting of 188 bytes. This framing structure is described by ISO/IEC 13810-1.

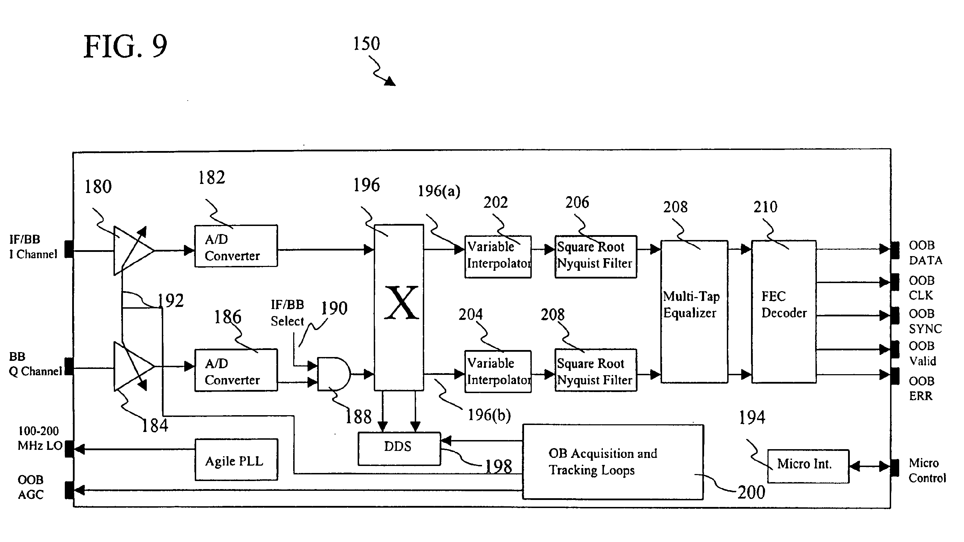

An exemplary OOBR PHY 150 is shown in FIG. 9. In IF mode a programmable gain amplifier 180, amplifies an IF centered signal. The amplified signal is then sub-sampled by an A/D converter 182, at a rate that is at least about eight times the symbol rate. In baseband mode, the complex baseband signal is amplified by dual amplifiers 180, 184 and sub-sampled by dual A/D converters 182, 186. The down-sampled quadrature channel is preferably input to an "AND" logic circuit 188 along with an IF/BB select signal 190. AND logic circuit 188 selectively enables further processing of the quadrature channel in accordance with the reception of an IF centered signal or a baseband I/Q signal.

The described exemplary out-of band receiver PHY 150 includes two automatic gain control loops (AGC). A first loop (not shown) controls 192 programmable gain amplifiers 180 and 184, providing an automatic gain control (AGC) function. A second loop (not shown) is closed at the tuner and is referred to as the outer tuner loop or the delayed-AGC loop. The first and second loops may include a power estimator, a threshold comparator and a first order loop filter. The filter output controls the gain of the programmable gain amplifiers 180, 184 in the case of the first loop and is fed into a sigma-delta modulator (not shown) for the creation of an analog control voltage in the case of the outer loop.

The gain of each loop may be independently set via the micro-controller interface 194. In the described exemplary OOB receiver, the power of the internal IF signal is estimated and compared to a programmable threshold. If the estimated power exceeds the threshold, the appropriate AGC integrator is incremented by a programmable value. If the estimated power is less than the threshold, the appropriate AGC integrator is decremented by a comparable amount.

An OOB digital demodulator 196 receives either an IF sampled input from the A/D converter 182 or a near baseband signal from dual A/D converters 182, 186 and down converts it to true-baseband. Digital demodulator 196 demodulates the digitized output(s) of the A/D converter(s) 182,186 with recovered clock and carrier timing. Digital demodulator 196 includes a full quadrature mixer that mixes the digitized outputs of the A/D converters with a complex data stream generated by a direct digital synthesizer (DDS) 198. DDS 198 may be controlled by timing recovery loop 200.

Timing recovery loop 200 may include a timing error discriminant, a loop filter, and a digital timing recovery block that controls the digital re-sampler. In the described exemplary embodiment, the carrier frequency/phase recovery and tracking loops are all digital loops which simultaneously offer a wide acquisition range and a large phase noise tracking ability. The loops may use decision directed techniques to estimate the angle and direction for phase/frequency compensation. The loops can be filtered by integral-plus-proportional filters, in which the integrator and linear coefficients of the filter are programmable to provide means for setting the loop bandwidth. The upper bits of the loop filter can control direct frequency synthesizer 198, providing both accurate frequency generation and fine phase resolution.

Matched interpolation filters 202, 204 convert mixer outputs 196(a), 196(b) to in-phase (I) and quadrature-phase(Q) baseband signals, that are correctly sampled in both frequency and phase. The I and Q baseband signals are then filtered by dual square-root Nyquist filters 206, 208 to reduce inter-symbol interference. Nyquist filters 206, 208 can accommodate roll-off factors in the range of about 30-50%. The described exemplary OOB demodulator includes a configurable, multi-tap decision feedback equalizer (DFE) 208. In the described exemplary embodiment, a four tap equalizer is used to remove inter-symbol interference generated by worst case coaxial cable channels including a wide variety of impairments such as un-terminated stubs.

In the described exemplary embodiment, the equalizer coefficients are updated every baud cycle for rapid convergence. The output of adaptive DFE 208 is input to a forward error correction (FEC) decoder 210. The described exemplary FEC decoder 210 consists of four layers, namely frame synchronization, de-interleaving, Reed-Solomon decoding, and de-randomization. The layers preferably support both DigiCipher II and DAVIC out of band FEC specifications.

In the described exemplary embodiment, hard decisions are input into the frame synchronization block which locks onto the inverted sync bit pattern. MIPS core (not shown) sets the characteristics of the frame synchronization acquisition and retention via micro control interface 194. Once synchronized, data interleaving is removed by a convolution de-interleaver. The de-interleaver may be based on the Ramsey III approach. After de-interleaving the data symbols are processed by a Reed-Solomon decoder which corrects symbol errors in each block. The decoded symbols are then de-randomized, which substantially undoes the randomization inserted at the modulator. The de-randomized output consists of MPEG-2 serial or parallel data, packet sync and a data clock.

Referring back to FIG. 5, OOB downstream processor 152 parses MPEG-2 compliant transport headers and messages. The OOB downstream processor 152 preferably provides the capability to parse messages with a plurality of protocols, including for example, MPEG private, INTS and GI STARVUE and stores the messages in a memory buffer. In the described exemplary embodiment, OOB downstream processor 152 interfaces with a MIPS core 154 via ISB 138.

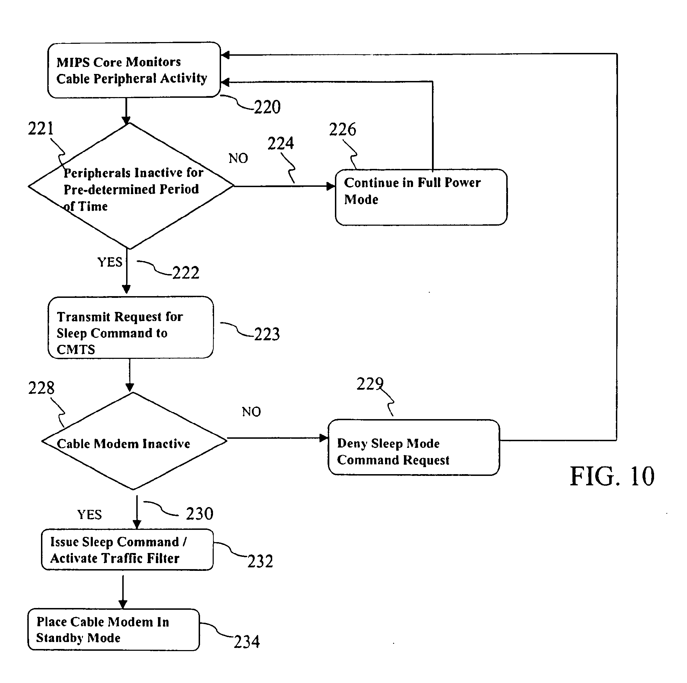

Referring to FIG. 10. in operation, the cable modem and CMTS manage the low power mode or sleep state of the cable modem. MIPS core monitors the activity of the cable modem peripherals 220 such as for example the USB MAC, Ethernet or Hook detection circuitry (not shown). Activity monitoring procedures vary in accordance with the interface at issue. For example, packet interfaces, such as for example, Ethernet or USB simply reset a timer each time a packet is received or transmitted via the interface. If the timer expires, and remains expired because no packets have arrived, the interface is said to be inactive. Traditional telephony interfaces on the other hand are in the active state when the handset is off hook or not in the cradle. If the handset is on hook or in the cradle, the interface is in the inactive or idle state.

If the peripherals are inactive for a predetermined, programmable length of time 222, MIPS core generates a sleep command request that is forwarded to the CMTS via upstream modulator 223. If the peripherals have not been inactive for the predetermined length of time 224, the cable modem remains in full power mode 226 utilizing primary DOCSIS communication channels.

In the described exemplary embodiment all interfaces connected to the cable modem that are monitored by MIPS core must be inactive for a predetermined timeout interval. In an exemplary embodiment, the time out interval is a programmable value allowing the service operator to select any suitable timeout interval. However, the timeout interval is preferably in the range of about one minute to fifteen minutes.

The upstream demodulator of the CMTS receives and processes a burst containing the request for a sleep command. The processed burst is forwarded to the DOCSIS MAC that extracts DOCSIS MAC frames from MPEG-2 frames, processes MAC headers, and filters and extracts the message frame containing the request message. The message packets may then be placed in system memory via an internal system bus.

The CMTS processor receives the message from memory and upon recognizing a sleep request message, ascertains the activity level for the cable modem 228 to determine whether to grant the sleep request. In the described exemplary embodiment, the activity level of a cable modem may be determined by looking at the time of the last message transmission to the requesting cable modem. If the time elapsed since the last message is less than a programmable variable or if the CMTS is actively engaged in the two way exchange of information with the cable modem the sleep request is denied 229.

However, if the CMTS is not actively engaged in two way message exchange of information with the cable modem and the time elapsed since the last message is greater that the programmable variable the CMTS grants the sleep request 232. A sleep command is then forwarded to the cable modem via the downstream modulator. In addition, the CMTS activates a downstream filter that captures communications addressed to cable modems that have been placed in the low power or sleep state. The captured communications are inspected for priority. In the described exemplary embodiment the traffic filter may discard best effort communications but initiates the communication of a wake-up message to the cable modem, via the secondary channel for high priority traffic.

Upon receipt of a sleep command, MIPS core may initiate a shutdown sequence to place the cable modem into a low power or standby mode 234 if the internal state of the cable modem indicates that the attached equipment is still inactive.

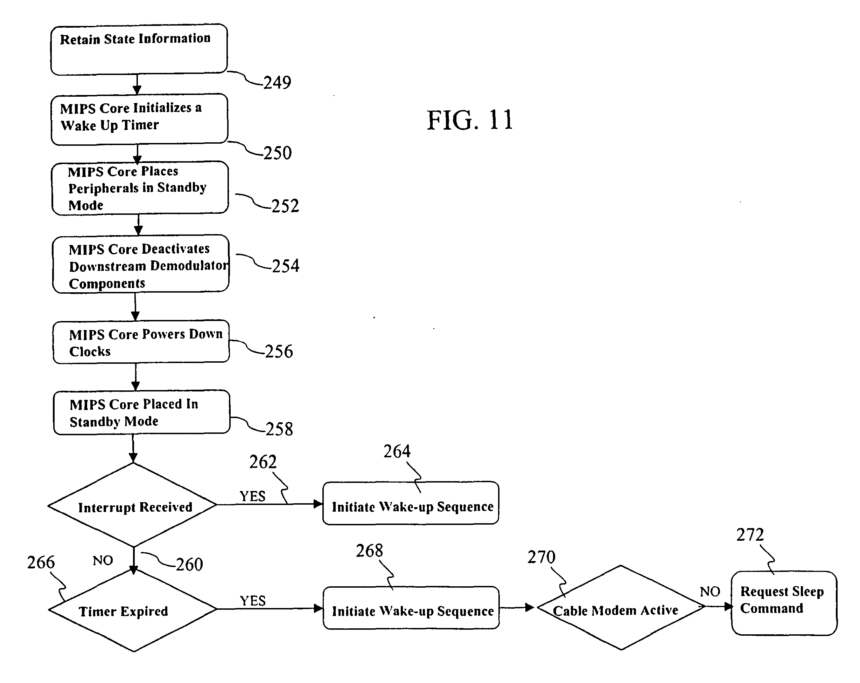

Referring to FIG. 11, in the described exemplary embodiment, the MIPS core executes a shutdown sequence by retaining certain state information 249. For example, MIPS core stores the operating frequency, equalization coefficients, data rate and modulation format under use at the time the sleep command was issued. The state information may be used to reduce the time required to reacquire synchronization when the cable modem returns to normal power operation. MIPS core also initializes a wake up timer 250, and then places the peripherals in standby mode 252. In the described exemplary embodiment, the MIPS core transmits write control register values via the ISB to each peripheral that place that peripheral into a low power mode. MIPS core also deactivates the following downstream demodulator components the AGC, carrier loop, baud loop and equalizer 254, and powers down clocks 256 to each peripheral. MIPS core is then placed in standby mode 258 by executing a sleep instruction.

A sleep cycle may be terminated by expiration of the timer or by an interrupt issued by any of the connected peripherals. If an interrupt is received 262 via the ISB, MIPS core initiates a wake up sequence 264 and the cable modem returns to full power operation to process the message that stimulate the wake up message. When the wake up timer lapses at the end of the predetermined interval 266, MIPS core initiates activation of the cable modem 268. However, in the absence of network activity 270 the cable modem may request another sleep mode cycle 272.

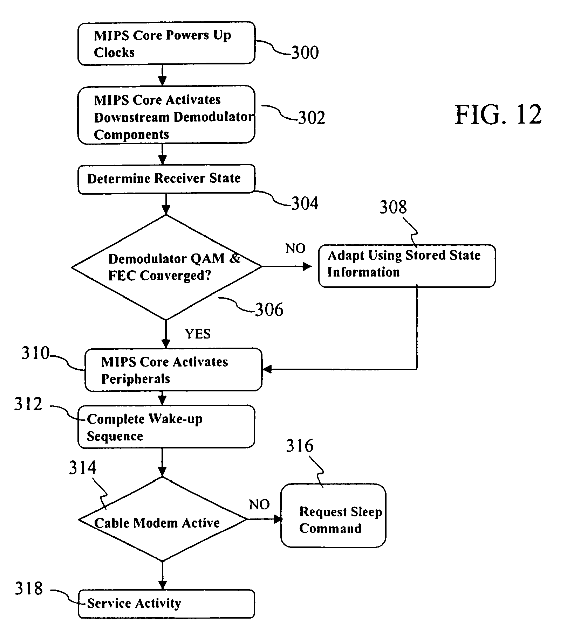

Referring to FIG. 12, in the described exemplary embodiment, the following sequence may be used to activate the cable modem. First MIPS core powers up the system clocks 300 that are used by the peripherals to perform their internal process operations. In the described exemplary embodiment, each peripheral may disable its clock independently of other peripherals. The MIPS core utilizes ISB write operations to place the downstream demodulator AGC, baud loop, carrier loop and equalizer into an operational state, removing the low power state 302.

The MIPS core may then determine the receiver state 304 by reading state information via the ISB interface. MIPS core utilizes the stored state information to determine whether downstream demodulator QAM and FEC are converged 306, based on the restored state information retained at the start of the shutdown sequence. If the receiver indicates that it has not reacquired the carrier and that it has not converged on the downstream data, then the downstream state has changed while the modem was in the sleep state. The receiver uses the retained state information to reconverge on the downstream data 308. MIPS core then utilizes ISB operations to activate the cable modem peripherals 310. The MIPS core establishes active operating conditions in the peripheral control registers and removes the low power state previously set via the ISB, thereby restoring normal operation 312.

When the cable modem completes the power up cycle, the MIPS core determines the activity level of the peripherals 314. If the peripherals continue to be inactive the MIPS core requests another sleep cycle from the CMTS 316. Otherwise, the cable mode will remain active and begin to service the activity of the connected equipment.

Although a preferred embodiment of the present invention has been described, it should not be construed to limit the scope of the appended claims. This invention is not to be limited to the specific arrangements and constructions shown and described. Rather the present invention may be utilized for power management in all DOCSIS compatible networks utilizing DOCSIS compatible equipment arrangements. Those skilled in the art will understand that various modifications may be made to the described embodiment.

Moreover, to those skilled in the various arts, the invention itself herein will suggest solutions to other tasks and adaptations for other applications. It is therefore desired that the present embodiments be considered in all respects as illustrative and not restrictive, reference being made to the appended claims rather than the foregoing description to indicate the scope of the invention.

**Claims**

1. A two way communication system (10) comprising:

   a local host (14) having a primary broadband communication channel, said local host (14) comprising a downstream modulator (30) for transmitting data and a secondary narrowband transmitter (36, 38) operating in a frequency range below the bandwidth of the primary broadband communication channel; and
   customer premise equipment (16) having a primary communication channel, said customer premise equipment (16) comprising an upstream modulator (130) for transmitting data for communicating with the primary broadband communication channel of the local host (14) and a secondary low power out of band receiver (140) that receives out of band control signals of the secondary narrowband transmitter (36, 38) of the local host (14) during a low power operation of the customer premise equipment (16).

2. The two way communication system of claim 1, wherein the customer premise equipment (16) further comprises one or more peripherals (144, 148) that provide two way communication with one or more communication devices coupled to the customer premise equipment (16).

3. The two way communication system of claim 2, wherein the customer premise equipment (16) further comprises a processor (154) that monitors activity level of the customer premise equipment (16) and requests a sleep command from the local host (14) when the peripherals have been inactive for a predetermined duration.

4. The two way communication system of claim 3, wherein the local host (14) further comprises a host processor (40) that processes the request for sleep command and grants the request in absence of traffic for the customer premise equipment (16).

5. The two way communication system of claim 4, wherein the host processor (40) activates a downstream filter that buffers communications addressed to customer premise equipment (16) that has been placed in low power mode.

6. The two way communication system of claim 5, wherein the host processor (40) discards best effort communications buffered in the downstream filter.

7. The two way communication system of claim 5, wherein the host processor (40) generates a wake-up message when high priority communications are received by the downstream filter.

8. The two way communication system of claim 7, wherein the out of band transmitter (36, 38) comprises an out of band generator (36) that processes the wake messages and forwards wake up interrupts to the customer premise equipment via an out of band generator PHY (38).

9. The two way communication system of claim 8, wherein the out of band generator (36) comprises a protocol data unit processor (56) that separates service data unit packets generated by the host processor (40) into one or more transport packets.

10. The two way communication system of claim 9, wherein the out of band generator (36) further comprises a message generator (58) for interfacing the protocol data unit processor (56) with the out of band generator PHY (38).

11. The two way communication system of claim 8, wherein the out of band generator PHY (38) comprises a symbol mapper (94) for mapping the wake interrupts into one or more modulation formats.

12. The two way communication system of claim 11, wherein the out of band generator PHY (38) further comprises a modulator (106, 108) for modulating the mapped wake up interrupts onto quadrature carriers (110).

13. The two way communication system of claim 1, wherein the secondary low power out of band receiver (140) comprises an out of band receiver PHY (150) and an out of band downstream processor (152) for receiving and processing asynchronous wake-up commands from the local host (14).

14. The two way communication system of claim 13, wherein the out of band receiver PHY (150) comprises a frequency agile local oscillator for down converting channels within a predetermined bandwidth to an intermediate frequency signal.

15. The two way communication system of claim 13, wherein the out of band receiver PHY (150) comprises a digital demodulator for demodulating the asynchronous wake-up commands.

16. The two way communication system of claim 15, wherein the demodulator comprises a full quadrature mixer that mixes the asynchronous wake-up commands with a complex data stream generated by a direct digital synthesizer to form in phase and quadrature components.

17. The two way communication system of claim 16, wherein the out of band receiver PHY (150) further comprises a decision feedback equalizer for removing inter-symbol interference in the in phase and quadrature components.

**18.** The two way communication system of claim 16, wherein the out of band receiver PHY (150) further comprises a forward error correction decoder that decodes the in phase and quadrature components and forwards serial or parallel data to the out of band downstream processor (152).

**19.** A method for use in a two way communication system (10) comprising
a local host (14) having a primary broadband communication channel, said local host (14) comprising a downstream modulator (30) and a secondary narrowband transmitter (36, 38) and
customer premise equipment (16) having a primary communication channel, said customer premise equipment (16) comprising an upstream modulator (130) and a secondary low power out of band receiver (140),
the method comprising:

transmitting data by the downstream modulator (30);
operating the secondary narrowband transmitter (36, 38) in a frequency range below the bandwidth of the primary broadband communication channel;
transmitting data, by the upstream modulator (130), for communicating with the primary broadband communication channel of the local host (14);
receiving, by the secondary low power out of band receiver (140), out of band control signals of the secondary narrowband transmitter (36, 38) of the local host (14) during a low power operation of the customer premise equipment (16).

**Patentansprüche**

**1.** Zweiwegekommunikationssystem (10), das aufweist:

einen lokalen Host (14) mit einem primären Breitband-Kommunikationskanal, wobei der lokale Host (14) einen Downstream Modulator (30) zur Übertragung von Daten und einen sekundären Schmalbandsender (36, 38) aufweist, der in einem Frequenzbereich unterhalb der Bandbreite des primären Breitband-Kommunikationskanals arbeitet; und
ein Teilnehmer-Endgerät (Customer Premises Equipment) (16) mit einem primären Kommunikationskanal, wobei das Teilnehmer-Endgerät (16) einen Upstream Modulator (130) zur Übertragung von Daten zum Kommunizieren mit dem primären Breitband-Kommunikationskanal des lokalen Hosts (14) und einen sekundären bandexternen Niedrigenergie-Empfänger (140) aufweist, der bandexterne Steuersignale des sekundären Schmalbandsenders (36, 38) des lokalen Host (14) während eines Niedrigenergie-Betriebs des Teilnehmer-Endgeräts (16) empfängt.

**2.** Zweiwegekommunikationssystem nach Anspruch 1, wobei das Teilnehmer-Endgerät (16) des Weiteren ein oder mehrere Peripheriegeräte (144, 148) aufweist, die Zweiwegekommunikation mit einem oder mehreren Kommunikationsvorrichtungen bereitstellen, die an das Teilnehmer-Endgerät (16) gekoppelt sind.

**3.** Zweiwegekommunikationssystem nach Anspruch 2, wobei das Teilnehmer-Endgerät (16) des Weiteren einen Prozessor (154) aufweist, der den Aktivitätspegel des Teilnehmer-Endgeräts (16) überwacht und einen Sleep-Befehl von dem lokalen Host (14) anfordert, wenn die Peripheriegeräte für einen vorgegebenen Zeitraum inaktiv gewesen sind.

**4.** Zweiwegekommunikationssystem nach Anspruch 3, wobei der lokale Host (14) des Weiteren einen Host Prozessor (40) aufweist, der die Anfrage nach dem Sleep-Befehl verarbeitet und die Anfrage in Abwesenheit von Verkehr für das Teilnehmer-Endgerät (16) bewilligt.

**5.** Zweiwegekommunikationssystem nach Anspruch 4, wobei der Host Prozessor (40) ein Downstream Filter aktiviert, das Kommunikationen puffert, die an das Teilnehmer-Endgerät (16) adressiert sind, das in einen Niedrigenergiemodus versetzt worden ist.

**6.** Zweiwegekommunikationssystem nach Anspruch 5, wobei der Host Prozessor (40) Best Effort Kommunikationen, die in dem Downstream Filter gepuffert sind, verwirft.

**7.** Zweiwegekommunikationssystem nach Anspruch 5, wobei der Host Prozessor (40) eine Wecknachricht erzeugt, wenn Kommunikationen mit hoher Priorität von dem Downstream Filter empfangen werden.

8. Zweiwegekommunikationssystem nach Anspruch 7, wobei der bandexterne Sender (36, 38) einen bandexternen Generator (36) aufweist, der die Wecknachrichten verarbeitet und Weckunterbrechungen über eine bandexterne Generator-PHY an das Teilenehmer-Endgerät weiterleitet.

9. Zweiwegekommunikationssystem nach Anspruch 8, wobei der bandexterne Generator (36) einen Protokolldateneinheits-Prozessor (56) aufweist, der Servicedateneinheits-Pakete, die von dem Host Prozessor (40) erzeugt worden sind, in ein oder mehrere Transportpakete aufteilt.

10. Zweiwegekommunikationssystem nach Anspruch 9, wobei der bandexterne Generator (36) des Weiteren einen Nachrichtengenerator (58) zum Koppeln des Protokolldateneinheits-Prozessors (56) mit der bandexternen Generator-PHY (38) aufweist.

11. Zweiwegekommunikationssystem nach Anspruch 8, wobei die bandexterne Generator-PHY (38) einen Symbolmapper (94) zum Mappen der Weckunterbrechungen in ein oder mehrere Modulationsformate aufweist.

12. Zweiwegekommunikationssystem nach Anspruch 11, wobei die bandexterne Generator-PHY (38) des Weiteren einen Modulator (106, 108) zum Modulieren der gemappten Weckunterbrechungen auf Quadraturträger (110) aufweist.

13. Zweiwegekommunikationssystem nach Anspruch 1, wobei der sekundäre bandexterne Niedrigenergie-Empfänger (140) eine bandexterne Empfänger-PHY (150) und einen bandexternen Downstream Prozessor (152) zum Empfangen und Verarbeiten von asynchronen Weckbefehlen von dem lokalen Host (14) aufweist.

14. Zweiwegekommunikationssystem nach Anspruch 13, wobei die bandexterne Empfänger-PHY (150) einen frequenzagilen lokalen Oszillator zum Herunterkonvertieren von Kanälen in einer vorgegebenen Bandbreite auf ein Zwischenfrequenzsignal aufweist.

15. Zweiwegekommunikationssystem nach Anspruch 13, wobei die bandexterne Empfänger-PHY (150) einen digitalen Demodulator zum Demodulieren der asynchronen Weckbefehle aufweist.

16. Zweiwegekommunikationssystem nach Anspruch 15, wobei der Demodulator einen vollständigen Quadraturmischer aufweist, der die asynchronen Weckbefehle mit einem komplexen Datenstrom mischt, der von einem direkten digitalen Synthetisierer erzeugt worden ist, um gleichphasige und Quadratur-Anteile auszubilden.

17. Zweiwegekommunikationssystem nach Anspruch 16, wobei die bandexterne Empfänger-PHY (150) des Weiteren einen entscheidungsrückgekoppelten Entzerrer zum Entfernen von Inter-Symbol Interference in den gleichphasigen und Quadratur-Anteilen aufweist.

18. Zweiwegekommunikationssystem nach Anspruch 16, wobei die bandexterne Empfänger-PHY (150) des Weiteren einen Vorwärtsfehlerkorrekturdecoder aufweist, der die gleichphasigen und Quadratur-Anteile decodiert und serielle oder parallele Daten an den bandexternen Downstream Prozessor (152) sendet.

19. Verfahren zur Verwendung in einem Zweiwegekommunikationssystem (10), das aufweist:

   einen lokalen Host (14) mit einem primären Breitband-Kommunikationskanal, wobei der lokale Host (14) einen Downstream Modulator (30) und einen sekundären Schmalbandsender (36, 38) aufweist, und
   ein Teilnehmer-Endgerät (16) mit einem primären Kommunikationskanal, wobei das Teilnehmer-Endgerät (16) einen Upstream Modulator (130) und einen sekundären bandexternen Niedrigenergie-Empfänger (140) aufweist,

   wobei das Verfahren umfasst:

   Senden von Daten durch den Downstream Modulator (30);
   Betreiben des sekundären Schmalbandsenders (36, 38) in einem Frequenzbereich unterhalb der Bandbreite des primären Breitband-Kommunikationskanals;
   Senden von Daten, durch den Upstream Modulator (130), zur Kommunikation mit dem primären Breitband-Kommunikationskanal des lokalen Hosts (14);
   Empfangen, durch den sekundären bandexternen Niedrigenergie-Empfänger (140), von bandexternen Steuersignalen des sekundären Schmalbandsenders (36, 38) des lokalen Hosts (14) während eines Niedrigenergie-Betriebs des Teilnehmer-Endgeräts (16).

**Revendications**

1.   Système de communication bidirectionnelle (10) comprenant :

un hôte local (14) ayant un canal de communication à bande large primaire, ledit hôte local (14) comprenant un modulateur en aval (30) pour transmettre des données et un émetteur à bande étroite secondaire (36, 38) fonctionnant dans une plage de fréquences au-dessous de la bande passante du canal de communication à bande large primaire ; et
un équipement de locaux de client (16) ayant un canal de communication primaire, ledit équipement de locaux de client (16) comprenant un modulateur en amont (130) pour transmettre des données pour communiquer avec le canal de communication à bande large primaire de l'hôte local (14) et un récepteur secondaire hors bande à faible puissance (140) qui reçoit des signaux hors bande de l'émetteur de bande étroite secondaire (36, 38) de l'hôte local (14) au cours d'un fonctionnement à faible puissance de l'équipement de locaux de client (16).

2.   Système de communication bidirectionnelle selon la revendication 1, dans lequel l'équipement de locaux de client (16) comprend en outre un ou plusieurs périphériques (144, 148) assurant une communication bidirectionnelle avec un ou plusieurs dispositifs de communication couplés à l'équipement de locaux de client (16).

3.   Système de communication bidirectionnelle selon la revendication 2, dans lequel l'équipement de locaux de client (16) comprend en outre un processeur (154) qui surveille le niveau d'activité de l'équipement dans de locaux de client (16) et demande une commande de sommeil depuis l'hôte local (14) lorsque les périphériques sont inactifs pendant une durée prédéterminée.

4.   Système de communication bidirectionnelle selon la revendication 3, dans lequel l'hôte local (14) comprend en outre un processeur hôte (40) qui traite la demande de commande de sommeil et octroie la demande en l'absence de trafic pour l'équipement de locaux de client (16).

5.   Système de communication bidirectionnelle selon la revendication 4, dans lequel le processeur hôte (40) active un filtre en aval qui met en tampon les communications adressées à l'équipement de locaux de client (16) qui ont été placés dans un mode à faible puissance.

6.   Système de communication bidirectionnelle selon la revendication 5, dans lequel le processeur hôte (40) abandonne les communications de meilleurs efforts en tampon dans le filtre en aval.

7.   Système de communication bidirectionnelle selon la revendication 5, dans lequel le processeur hôte (40) génère un message de réveil lorsque des communications de haute priorité sont reçues par le filtre en aval.

8.   Système de communication bidirectionnelle selon la revendication 7, dans lequel l'émetteur hors bande (36, 38) comprend un générateur hors bande (36) qui traite les messages de réveil et transfère des interruptions de réveil à l'équipement de locaux de client par l'intermédiaire d'une PHY de générateur hors bande (38).

9.   Système de communication bidirectionnelle selon la revendication 8, dans lequel le générateur hors bande (36) comprend un processeur d'unités de données de protocole (56) qui sépare des paquets d'unités de données de service générés par le processeur hôte (40) en un ou plusieurs paquets de transport.

10.   Système de communication bidirectionnelle selon la revendication 9, dans lequel le générateur hors bande (36) comprend en outre un générateur de messages (58) pour interfacer le processeur d'unités de données de protocole (56) avec la PHY de générateur hors bande (38).

11.   Système de communication bidirectionnelle selon la revendication 8, dans lequel la PHY de générateur hors bande (38) comprend un dispositif d'application cartographique de symboles (94) pour effectuer une application cartographique des interruptions de réveil dans un ou plusieurs formats de modulation.

13

**12.** Système de communication bidirectionnelle selon la revendication 11, dans lequel la PHY de générateur hors bande (38) comprend en outre un modulateur (106, 108) pour moduler les interruptions de réveil appliquées sur des porteuses en quadrature (110).

**13.** Système de communication bidirectionnelle selon la revendication 1, dans lequel le récepteur secondaire hors bande à faible puissance (140) comprend une PHY de récepteur hors bande (150) et un processeur en aval hors bande (152) pour recevoir et traiter des commandes de réveil asynchrones de l'hôte local (14).

**14.** Système de communication bidirectionnelle selon la revendication 13, dans lequel la PHY de récepteur hors bande (150) comprend un oscillateur local agile en fréquence pour la conversion vers le bas de canaux à l'intérieur d'une bande passante prédéterminée en un signal à fréquence intermédiaire.

**15.** Système de communication bidirectionnelle selon la revendication 13, dans lequel la PHY de récepteur hors bande (150) comprend un démodulateur numérique pour démoduler les commandes de réveil asynchrones.

**16.** Système de communication bidirectionnelle selon la revendication 15, dans lequel le démodulateur comprend un mélangeur en quadrature complet qui mélange les commandes de réveil asynchrones avec un flux de données complexes généré par un synthétiseur numérique direct pour former des composantes en phase et en quadrature.

**17.** Système de communication bidirectionnelle selon la revendication 16, dans lequel la PHY de récepteur hors bande (150) comprend en outre un égaliseur de rétroaction de décision pour enlever de l'interférence entre symboles dans les composantes en phase et en quadrature.

**18.** Système de communication bidirectionnelle selon la revendication 16, dans lequel la PHY de récepteur hors bande (150) comprend en outre un décodeur à correction d'erreur avant qui décode les composantes en phase et en quadrature et transmet des données en série ou en parallèle au processeur en aval hors bande (152).

**19.** Procédé destiné à être utilisé dans un système de communication bidirectionnelle (10) comprenant :

un hôte local (14) ayant un canal de communication à bande large primaire, ledit hôte local (14) comprenant un modulateur en aval (30) et un émetteur à bande étroite secondaire (36, 38) ; et
un équipement de locaux de client (16) ayant un canal de communication primaire, ledit équipement de locaux de client (16) comprenant un modulateur en amont (130) et un récepteur secondaire hors bande à faible puissance (140),
le procédé comprenant les étapes consistant à :

transmettre des données par le modulateur en aval (30) ;
faire fonctionner l'émetteur secondaire à bande étroite (36, 38) dans une plage de fréquences au-dessous de la bande passante du canal de communication à bande large primaire ;
transmettre des données, par le modulateur en amont (130), pour communiquer avec le canal de communication à bande large primaire de l'hôte local (14) ;
recevoir, par le récepteur secondaire hors bande à faible puissance (140), des signaux de commande hors bande de l'émetteur secondaire à bande étroite (36, 38) de l'hôte local (14) au cours d'un fonctionnement à faible puissance de l'équipement de locaux de client (16).

FIG. 1

Headend *12*

Internet Router

CMTS Line Card *14*

HFC Network *18*

Cable Modem *16*

*10*

EP 1 212 922 B1

# FIG. 2

FIG. 3

EP 1 212 922 B1

OOBG
36

38

OOBG
PHY

MMG

56

PDUP
& CRC

58

50

PBUS
Controller

52

Register Block
Interface

DATA

FIFO

54

FIG. 4

38

# FIG. 5

EP 1 212 922 B1

EP 1 212 922 B1

**FIG. 6**

Upstream
Carrier

Out of Band
Carrier

Downstream
Carrier

Bandsplit at
52MHz

**FIG. 7**

151

OOB
RF

70 -130 MHz

160

162

162(a)

VGA

166

166(a)

170

170(a)

44 MHz
SAW
Filter

172 16

172(a)

RF In

Cable Modem

PLL Out

114 -174 MHz

168

AGC

164

Level Shift

**FIG. 8**

| MPEG Frame i | MPEG Frame i+1 | • • • | MPEG Frame N |

FIG. 9

150

180  182  196  196(a)  202  206  208  210

IF/BB
I Channel

192

186  IF/BB
Select  190

184

X

BB
Q Channel

A/D
Converter

A/D
Converter

188

Variable
Interpolator

Variable
Interpolator

204  208

Square Root
Nyquist Filter

Square Root
Nyquist Filter

196(b)

Multi-Tap
Equalizer

FEC
Decoder

OOB
DATA

OOB
CLK

OOB
SYNC

OOB
Valid

OOB
ERR

100-200
MHz LO

OOB
AGC

Agile PLL

DDS

198

OB Acquisition and
Tracking Loops

200

194

Micro Int.

Micro
Control

EP 1 212 922 B1

21

EP 1 212 922 B1

MIPS Core Monitors
Cable Peripheral Activity

~220

221

Peripherals Inactive for
Pre-determined Period
of Time

NO

224

226

Continue in Full Power
Mode

YES

~222

Transmit Request for
Sleep Command to
CMTS

~223

228

Cable Modem Inactive

NO

229

Deny Sleep Mode
Command Request

FIG. 10

YES

230

Issue Sleep Command /
Activate Traffic Filter

~232

Place Cable Modem In
Standby Mode

~234

**FIG. 11**

```
┌─────────────────────────┐
│ Retain State Information │
└─────────────────────────┘
            │  ╲__249
            ▼
┌─────────────────────────┐
│ MIPS Core Initializes a │
│ Wake Up Timer           │
└─────────────────────────┘
            │  ╲__250
            ▼
┌─────────────────────────┐
│ MIPS Core Places        │
│ Peripherals in Standby  │
│ Mode                    │
└─────────────────────────┘
            │  ╲__252
            ▼
┌─────────────────────────┐
│ MIPS Core Deactivates   │
│ Downstream Demodulator  │
│ Components              │
└─────────────────────────┘
            │  ╲__254
            ▼
┌─────────────────────────┐
│ MIPS Core Powers Down   │
│ Clocks                  │
└─────────────────────────┘
            │  ╲__256
            ▼
┌─────────────────────────┐
│ MIPS Core Placed In     │
│ Standby Mode            │
└─────────────────────────┘
            │  ╲__258
            ▼
```

262

264

◇ Interrupt Received ◇ ──YES──▶ Initiate Wake-up Sequence

NO  ╲__260

266   268   270   272

◇ Timer Expired ◇ ──YES──▶ Initiate Wake-up Sequence ──▶ ◇ Cable Modem Active ◇ ──NO──▶ Request Sleep Command

FIG. 12

```
┌─────────────────────────┐
│ MIPS Core Powers Up     │──300
│ Clocks                  │
└─────────────────────────┘
            │
            ▼
┌─────────────────────────┐
│ MIPS Core Activates     │
│ Downstream Demodulator  │──302
│ Components              │
└─────────────────────────┘
            │
            ▼
┌─────────────────────────┐
│ Determine Receiver State│
└─────────────────────────┘
            │──304
            ▼
                                          308
        ◇ Demodulator QAM &              ┌──────────────────────┐
          FEC Converged? ◇──── NO ──────▶│ Adapt Using Stored State│
                    │                     │ Information           │
                   306                    └──────────────────────┘
                    │ YES                          │
                    ▼                              │
310──┌─────────────────────────┐                   │
     │ MIPS Core Activates     │◀──────────────────┘
     │ Peripherals             │
     └─────────────────────────┘
                    │
312──┌─────────────────────────┐
     │ Complete Wake-up        │
     │ Sequence                │
     └─────────────────────────┘
                    │
    314             ▼                         316
        ◇ Cable Modem Active ◇──── NO ──────▶┌──────────────┐
                    │                         │ Request Sleep│
                    │                         │ Command      │
                    ▼                         └──────────────┘
318──┌─────────────────────────┐
     │ Service Activity        │
     └─────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9933229 A
- EP 0243899 A
- EP 0433166 A
- US 2005190696 A